# EUROPÄISCHE PATENTSCHRIFT

(11) **EP 2 701 128 B1**
(45) Veröffentlichungstag und Bekanntmachung des Hinweises auf die Patenterteilung: **28.06.2017**
(21) Anmeldenummer: 13003946.4
(22) Anmeldetag: 07.08.2013
(51) Int. Cl.: G08B 13/08, B60R 25/10

(54) **Vorrichtung zum Erkennen des Öffnens eines Tankdeckels**
Device for detecting the opening of a fuel tank cap
Dispositif de détection de l'ouverture d'un couvercle de réservoir

(30) Priorität: 20.08.2012 DE 102012016523
(43) Veröffentlichungstag der Anmeldung: 26.02.2014
(73) Patentinhaber: metraTec GmbH, 39106 Magdeburg (DE)
(72) Erfinder: Schießl, Albin, 92447 Schwarzhofen (DE); Meyer, Tobias, 39114 Magdeburg (DE)
(74) Vertreter: Meyer, Rudolf

(56) Entgegenhaltungen:
- FR-A3- 2 908 545
- US-A1- 2007 268 138

## Beschreibung

### Aufgabe der Erfindung

In der Praxis stellt sich die Aufgabe, das Öffnen eines Tankdeckels zu detektieren, um unbefugte Entnahmen zu erkennen und zu melden. Dies betrifft insbesondere gewerblich genutzte Tanks in Fahrzeugen, die aufgrund der hohen Füllmenge erhebliche Werte beinhalten können.

### Stand der Technik

Bekannte Lösungen verwenden eine Füllstandsmessung und detektieren einen sich schnell verringernden Füllstand als Diebstahlsituation. Dies erfordert die Anbringung einer separaten Füllstandsmessung oder die Anbindung an das bereits im Fahrzeug vorinstallierte Füllstandsmesssystem. Dies ist häufig nur mit erheblichem Aufwand möglich, da die entsprechenden Hard- und Softwareschnittstellen für derartige Erweiterungen von Serienfahrzeugen nicht bereitgestellt werden.

Weitere mögliche Lösungen, wie unter anderem aus DE 202006 019 967 oder DE 20 2007 004 129 bekannt, verwenden externe Bewegungssensoren, wie in GB 2 343 283, oder Lagesensoren die am oder über den eigentlichen Tankdeckel montiert werden. Diese Lösungen haben wie alle Beschleunigungssensoren den Nachteil hoher Fehlalarmanfälligkeit durch Neigungsbewegungen des Fahrzeug im Wind oder das Ansprechen auf Lärmquellen (Vibration) in unmittelbarer Nähe. Häufig wird zusätzlich oder als alleinige Sensorik ein Kontakt verwendet, der das Öffnen des Tankdeckel melden soll. Diese kontaktbehaftete Detektion hat sich als störanfällig und schlecht nachrüstbar erwiesen, da mechanische Änderungen am Tankverschluss erforderlich sind.

Aus DE198 07 452 ist eine Lösung bekannt, welche das Problem der Kontaktierung durch die Verwendung eines Magnetschalters löst.

Aus US 2007 0137730 ist ein System bekannt, welches einen passiven RFID Transponder oder optischen Transponder verwendet, um die exakte Position des Tankverschlusses zu erkennen. Dieses erlaubt die Erkennung jedoch nur auf sehr geringe Entfernungen und erfordert die Montage entsprechender Elektronik zur Positionsbestimmung des Tags direkt außen am Tank oder Tankdeckels, was unerwünscht ist.

Das Dokument US 2007/268138 A1 offenbart eine Vorrichtung zur Detektion des Öffnens eines Tankdeckels bestehend aus mindestens einer Funkbake und mindestens einer Basisstation, wobei die Funkbake im Inneren eines Tanks angebracht ist und die Detektion des Öffnens des Tankdeckels durch die Unterbrechung der Schirmung zwischen Bake und Basisstation bestehend aus Tankwandung und Tankdeckel und der damit einhergehenden Abnahme der Streckendämpfung, welche von der Basisstation mittels einer Einrichtung zur Messung der Empfangsleistung detektiert wird, erfolgt.

### Erfindungsgemäße Lösung

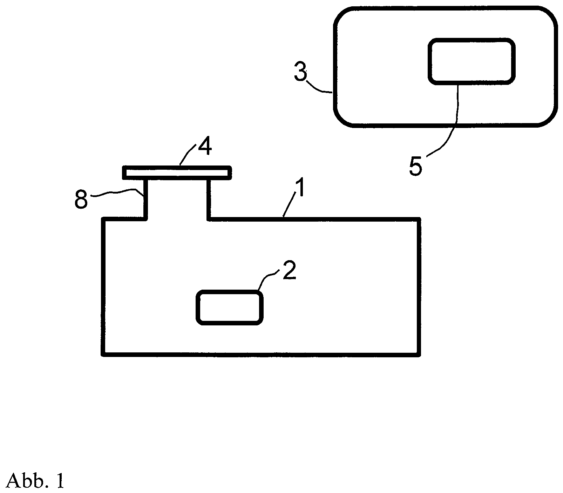

Die beanspruchte Lösung ist in Abbildung 1 dargestellt und detektiert das Öffnen des Tanks (1) über die Messung der Streckendämpfung einer Funkverbindung zwischen einer innerhalb des Tanks angebrachten Funkbake (2) und einer Basistation (3), die an beliebiger anderer Stelle am zu überwachenden Objekt oder in Funkreichweite angebracht ist. Bei geschlossenem Tankdeckel (4) unterliegt diese Funkverbindung einer sehr hohen Streckendämpfung, da der Tank (1) mit typischerweise metallischer Wandung und geschlossenem, ebenfalls metallischem Deckel (4) eine effektive Schirmung darstellt und die Funkstrecke mit einer sehr hohen zusätzlichen Dämpfung beaufschlagt. Wird der Tankdeckel (4) geöffnet, nimmt die Streckendämpfung zwischen der immer noch im Tank befindlicher Bake (2) und Basisstation (3) stark ab, was von der Basisstation leicht detektiert werden kann. Die Basisstation verfügt dazu über eine Einrichtung zur Ermittlung der Empfangsleistung (Received Signal Strength Indicator, RSSI) des von der Bake (2) empfangenen Signals.

Die Kommunikationsstrecke wird in dieser einfachen und besonders vorteilhaften Ausführung nur unidirektional in Richtung Bake (2) zu Basisstation (3) genutzt. Die Bake (2) braucht daher lediglich uhrgesteuert in einem geeigneten Intervall ein sie eindeutig identifizierendes Signal abzustrahlen. Diese Signatur kann analog oder besonders vorteilhaft digital ausgeführt werden, was es ermöglicht, eine nahezu beliebige Zahl von Funkbaken (2) an einer oder mehreren Basistationen (3) zu betreiben.

Bei hergestellter Funkverbindung kann die Kommunikation auch bidirektional erfolgen, beispielsweise um die Bake (2) zu konfigurieren oder den Batteriestatus abzufragen.

Die erfindunggemäße Lösung verzichtet also auf jede Art von Primärsensorik zur Lagedetektion, Beschleunigungsmessung, Positionsbestimmung, Näherungsschalter oder Überwachung von Kontakten. Weitere Sensoren können jedoch zur Erweiterung des Funktionsumfanges verwendet werden und deren Daten bei hergestellter Funkverbindung an die Basisstation (3) übertragen werden.

Das für die Funkverbindung verwendete Frequenzspektrum ist beliebig und wird primär nach regulatorischen Gesichtspunkten ausgewählt. Besonders vorteilhaft sind ISM Bänder im Bereich zwischen 125 kHz und 24 GHz.

Die Energieversorgung der Bake (2) erfolgt über Primärzellen, Akkumulatoren oder in mobilen Anwendungen mittels Energiegewinnung aus Bewegungsenergie. Auch eine leitungsgebundene Energieversorgung ist möglich, aber weniger vorteilhaft, da aufwändig zu installieren.

Die Basisstation (3) kann bei Meldung des unbefugten Öffnens einen lokalen Alarm auslösen, einen stillen Alarm an eine dritte Stelle weiterleiten oder die Daten des Ereignisses lokal speichern, um sie später auszuwerten. Dazu muss die Basistation gegebenenfalls um weitere Schnittstellen zur Funkkommunikation oder leitungsgebundenen Kommunikation erweitert werden. Besonders vorteilhaft erscheinen hier ein GSM/UMTS Uplink und ein GPS Empfänger zur Bestimmung des Ortes des Ereignisses des Öffnens.

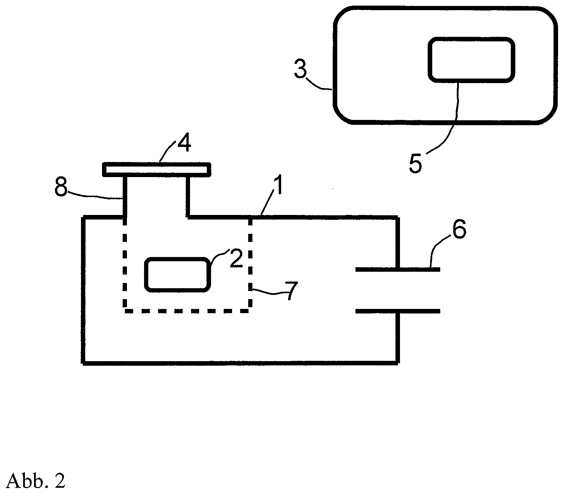

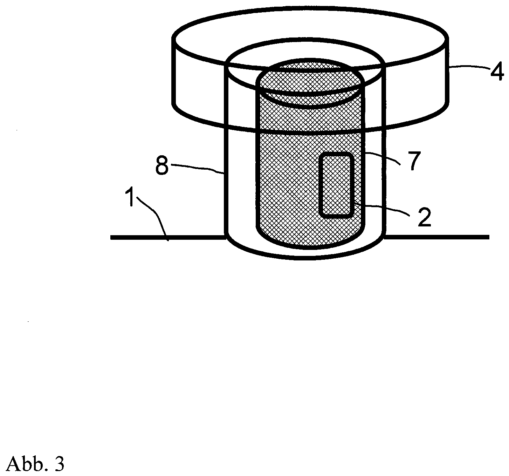

Da der Tank (1), wie Abbildung 2 dargestellt, durch mögliche Leitungsanschlüsse, die nicht metallisch ausgeführt sind, bereits ein verringerte Schirmwirkung aufweisen kann, kann ein Schirmeinsatz (7) aus einer gitterartigen Struktur eingebracht werden, um dem mit dem Deckel (4) verschlossenem Tank (1) eine ausreichend hohe Schirmwirkung zu geben. Diese muss so beschaffen sein, dass das Funksignal stark gedämpft wird, andererseits kein Probleme beim Befüllen des Tanks durch Behinderung des Treibstoffflusses auftreten. Besonders geeignet sind hier Strukturen aus gelochten Blechen, Drahtnetzen, Streckmetallgittern oder auch käfigartige Ausführungen. Der Schirmeinsatz (7) umschließt die Bake (2) ganz oder teilweise und bildet mit dem Deckel (4) und optional auch mit Teilen der Wandung des Tanks (1) eine Schirmung zwischen Bake (2) und Basisstation (3), die eine wesentlich höhere Funkfelddämpfung zwischen Bake (2) und Basisstation (3) erzeugt als bei geöffnetem Tankdeckel. Die erfindungsgemäße Ausführung des Schirmeinsatzes (7) ist ein zylinderförmiger Einsatz direkt in den Tankstutzen (8) mit Aufnahme für die Bake (2) wie in Abbildung 3 gezeigt.

### Bezugszeichenliste

1 Tank, 2 Bake, 3 Basisstation, 4 Tankdeckel, 5 Einrichtung zur Messung der Empfangsleistung, 6 Leitungsanschluss, 7 Schirmeinsatz, 8 Tankstutzen

## Patentansprüche

1. Vorrichtung zur Detektion des Öffnens eines Tankdeckels (4) eines einen Tankstutzen (8) aufweisenden Tanks (1) eines Fahrzeugs, bestehend aus mindestens einer Funkbake (2) und mindestens einer Basisstation (3), wobei die Funkbake (2) im Inneren des Tanks (1) innerhalb eines eine gitterartige zylinderförmige metallische Struktur (7) aufweisenden Schirmeinsatzes (7) im Tankstutzen (8) angebracht ist und die Detektion des Öffnens des Tankdeckels (4) durch die Unterbrechung der Schirmung zwischen Bake (2) und Basisstation (3) bestehend aus Tankwandung und Tankdeckel (4) und der damit einhergehenden Abnahme der Streckendämpfung, welche von der Basisstation (3) mittels einer Einrichtung zur Messung der Empfangsleistung (5) detektiert wird, erfolgt.

2. Vorrichtung nach Anspruch 1, wobei die Bake (2) über eine eindeutige Signatur verfügt.

## Claims

1. A device for detecting that a fuel tank cap (4) of a vehicle's fuel tank (1) having a tank neck (8) is opened, which consists of at least one radio beacon (2) and at least one base station (3), in which the radio beacon (2) is arranged inside the fuel tank (1) within a shield insert (7), which has a grid-like cylindrical metallic structure (7), in the tank neck (8) and the detection that the fuel tank cap (4) is opened takes place by interrupting the shield between beacon (2) and base station (3), which consists of fuel tank wall and fuel tank cap (4) and the decrease in the path attenuation accompanying it, which is detected by the base station (3) by means of an apparatus for measuring the received signal strength (5).

2. A device according to claim 1, in which the beacon (2) has an unambiguous signature.

## Revendications

1. Dispositif pour la détection de l'action d'ouverture d'un bouchon de réservoir (4) appartenant à un réservoir (1) disposant d'une goulotte de remplissage (8) sur un véhicule, composé d'au moins une radiobalise (2) et d'au moins une station de base (3), la radiobalise (2) étant montée à l'intérieur du réservoir (1) au sein d'un blindage (7) sous la forme d'une structure métallique cylindrique de type grille (7) dans la goulotte de remplissage (8), et l'action d'ouverture du bouchon de réservoir (4) étant détectée par l'annulation du blindage entre la balise (2) et la station de base (3), le blindage étant composé de la paroi du réservoir et du bouchon de réservoir (4), et par la réduction de l'affaiblissement de propagation qui en résulte et qui est détectée par la station de base (3) via un dispositif pour mesurer la puissance de réception (5).

2. Dispositif selon la revendication 1, où la balise (2) dispose d'une signature unique.
